(19) Europäisches Patentamt
European Patent Office
Office européen des brevets

(11) **EP 4 310 474 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **23180134.1**

(22) Anmeldetag: **19.06.2023**

(51) Internationale Patentklassifikation (IPC):
**G01M 3/28** *(2006.01)*      **E03B 7/07** *(2006.01)*

(52) Gemeinsame Patentklassifikation (CPC):
**E03B 7/075; G01M 3/2807**

(54) **LECKAGESCHUTZ ZUR ERKENNUNG VON GROSS- UND KLEINLECKAGEN**

LEAKAGE PROTECTION FOR DETECTING LARGE AND SMALL LEAKS

PROTECTION CONTRE LES FUITES POUR LA DÉTECTION DE FUITES IMPORTANTES ET PETITES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.07.2022   DE 202022104097 U**

(43) Veröffentlichungstag der Anmeldung:
**24.01.2024   Patentblatt 2024/04**

(73) Patentinhaber: **Judo Wasseraufbereitung GmbH**
**71364 Winnenden (DE)**

(72) Erfinder:
• **BROCKE, Sebastian**
  **71642 Ludwigsburg (DE)**
• **MASSA, Eckard**
  **71720 Oberstenfeld-Gronau (DE)**
• **BARTH, Jakob**
  **71522 Backnang (DE)**

(74) Vertreter: **Kohler Schmid Möbus Patentanwälte**
**Partnerschaftsgesellschaft mbB**
**Gropiusplatz 10**
**70563 Stuttgart (DE)**

(56) Entgegenhaltungen:
**WO-A1-99/28722        CA-A1- 2 960 587**
**US-A1- 2013 291 974**

## Beschreibung

Die Erfindung betrifft eine Leckageschutzvorrichtung zum automatischen Verschließen einer Schlauch- und/oder Rohrleitung für den Transport flüssiger oder gasförmiger Medien, insbesondere Wasser, umfassend

- eine zentrale Zuleitung,
- einen zwischen der zentralen Zuleitung und einer nachfolgenden Hausinstallation angeordneten Hauptkanal und einen Bypass,
- ein Verschlussorgan zur Unterbrechung des Gesamtvolumenstroms,
- ein Sperrventil im Hauptkanal, das geschlossen ist, wenn der Druckunterschied über dem Sperrventil kleiner ist als ein Öffnungsschwellenwert $\Delta p_{\ddot{O}}$, und geöffnet ist, wenn der Druckunterschied über dem Sperrventil größer ist als der Öffnungsschwellenwert $\Delta p\ddot{o}$, wobei bei geschlossenem Sperrventil ein Volumenstrom vollständig durch den Bypass geleitet wird, sowie,
- eine elektronische Steuervorrichtung und Mittel zum Schließen bzw. Öffnen des Verschlussorgans.

Eine solche Vorrichtung ist aus der DE 197 06 564 A1 (=Referenz [1]) bekannt.

Eine ähnliche Leckageschutz-Anordnung mit mehreren Einheiten, die über ein Netzwerk miteinander kommunizieren, wird in der WO 2014/029699 A1 (=Referenz [2]) vorgestellt. Mit der Anordnung nach Referenz [2] sollen sehr kleine Lecks mittels eines Drucksensors detektiert werden. Hierzu wird die Wasserzufuhr einer Wasserinstallation abgesperrt. Der Drucksensor registriert bei Vorliegen einer Kleinleckage in der Wasserinstallation einen Druckabfall. Alternativ wird zur Erkennung von sehr kleinen Lecks vorgeschlagen, kleine Strömungen mittels eines Widerstands durch einen Bypass zu leiten, in dem zusätzlich zu einem ersten Strömungsmesser in der Hauptleitung in zweiter Strömungsmesser vorgesehen ist, der wesentlich empfindlicher ist als der erste Strömungsmesser. Zur Erkennung kleiner Leckagen wird zeitweilig abgesperrt und ein Druckabfall bei Leckage mittels eines Drucksensors detektiert. Ebenso wird zur Erfassung kleinerer Strömungen vorgeschlagen, mittels Bypass und einem zweiten, empfindlicheren Strömungsmesser im Bypass kleine Strömungen zu erfassen. Ein dynamischer Widerstand, beispielsweise eine Klappe oder ein Rückflussverhinderer, soll bewirken, dass die Strömung bei kleinen Durchflussraten durch den Strömungsmesser im Bypass detektiert werden, während große Durchflussraten vom ersten Strömungsmesser in der Hauptleitung erfasst werden. Weiterhin kann die Strömung bei kleinen Durchflussraten mittels eines Bypasses einen Rückflussverhinderer umgehen und direkt auf die Turbinenschaufeln treffen.

Nachteilig bei der Lehre gemäß Referenz [2] ist, dass bei der erstgenannten Methode die Wasserzufuhr abgesperrt werden muss und anschließend eine gewisse Zeit vergeht, bis bei Vorliegen einer Kleinleckage ein Druckabfall registriert wird. Bei dieser zeitweiligen Absperrung ist dann die Wasserversorgung vollständig unterbrochen. Alternativ müssen zwei klassische Strömungsmesser, beispielsweise Turbinen, eingesetzt werden. Des Weiteren ist der aufwändige Aufbau und die dadurch erforderliche teure Ausgestaltung dieser Leckageschutz-Anordnung unvorteilhaft. Es werden diverse Drucksensoren, Rückflussverhinderer und zusätzliche Strömungsmesser benötigt.

Schlauch- und/oder Rohrleitungssysteme für den Transport flüssiger oder gasförmiger Medien, insbesondere Wasser, werden in vielfältigen Anwendungen, etwa in der Industrie oder in der Landwirtschaft, aber auch im Bereich der häuslichen Wasserversorgung seit Jahrtausenden eingesetzt. Hauswasserinstallationen, insbesondere Wasserbehandlungsanlagen, sind weit verbreitet in Haushalten, werden aber auch in technischen Anlagen industriell eingesetzt. Oftmals wird behandeltes, insbesondere enthärtetes und/oder filtriertes Wasser gewünscht oder benötigt. Üblicherweise werden dafür Wasserenthärtungsanlagen und/oder Wasserfilter eingesetzt, vor allem bei Trinkwasserinstallationen. An den Schläuchen beziehungsweise Rohren sowie den zugehörigen Armaturen, die ausgehend von derartigen Wasserinstallationen in die einzelnen Räume des betreffenden Gebäudes oder auch auf eine Terrasse oder in den Garten geführt sind, können unter widrigen - gleichwohl in der Praxis relativ häufig vorkommenden- Umständen Leckagen entstehen, welche außer zu Wasserverlust noch zu erheblichen weiteren Schäden führen können. Diese Wasserschäden gilt es zu vermeiden oder wenigstens zu minimieren.

WO 2012/098038 A1 (=Referenz [3]) beschreibt ein Leckage-Schutzsystem mit einem Hauptkanal und einem Bypass, wobei im Hauptkanal ein Strömungsmesser zur Erkennung größerer Leckagen und im Bypass ein Strömungsmesser zur Erkennung von kleinen Leckagen angeordnet ist. Hierzu schließt ein Ventil im Hauptkanal und leitet die Strömung durch den Bypass, wenn Strömungsmesser an sämtlichen Verbrauchern keinen Durchfluss registrieren. Das System erfordert sehr viele Strömungsmesser und ist daher sehr aufwändig.

DE 10 2018 119 815 A1 (=Referenz [4]) offenbart die Erfassung kleiner und großer Volumenströme, indem bei großen Volumenströmen ein Bypass-Ventil öffnet und bei kleinen Volumenströmen schließt, so dass ein Volumenstromsensor im Hauptkanal stets einen in seinem Messbereich liegenden Volumenstrom erfährt. Gemessen wird der Volumenstrom nur im Hauptkanal. Dies hat zwar auf den ersten Blick den Vorteil, dass nur ein Volumenstromsensor im Hauptkanal benötigt wird. Bei geöffnetem Bypass, also bei hohen Volumenströmen, kann der Gesamtvolumenstrom aber nur indirekt aus dem Volumenstromanteil des Hauptkanals am Gesamtvolumenstrom abgeleitet werden, was eine zusätzliche genaue Bestimmung dieses Anteils notwendig macht oder aber zu Ungenauigkeiten führt.

EP 3 032 236 A1 (=Referenz [5]) offenbart eine Flüssigkeitsströmungs-Detektionsvorrichtung zur Überwachung eines Lecks in einem Leitungssystem. Die Vorrichtung weist zwei Bypass-Kanäle auf, in denen jeweils ein Kolben mit Magnet angeordnet ist, die sich aufgrund des vorherrschenden Drucks in den Bypass-Kanälen, bei geschlossenem Hauptventil, in der entsprechenden Bypass-Leitung verschieben. Der Position der Magneten wird von Magnetsensoren detektiert, wodurch erkannt wird, dass ein Leck vorliegen könnte. Nachteilig hierbei ist, dass das Hauptventil geschlossen werden muss und nur Leckagen ermittelt werden können, die einen kleinen Volumenstrom aufweisen. Größere Leckagen werden nicht erkannt, da dann der Volumenstrom durch das Hauptventil fließt und nicht über die Bypass-Kanäle. Weiterhin besteht konstruktionsbedingt die Gefahr einer Verkeimung, da der erste Bypass stets geschlossen ist und somit nicht durchströmt wird (Totvolumen).

EP 3 848 690 B1 (=Referenz [6]) beschreibt eine Wasserschadenschutzvorrichtung, bei der der Anlaufwert eines Turbinen- oder Flügelrad-Durchflussmessers durch Erhöhung der Anströmgeschwindigkeit der Turbine bzw. des Flügelrads verbessert wird, indem ein unmittelbar davor angeordnetes Verschlussorgan in Betriebsphasen, in denen kein Durchfluss durch den Turbinen- oder Flügelrad-Durchflussmesser registriert wird, partiell geschlossen wird und dadurch die Anströmgeschwindigkeit erhöht wird. Die Wasserzufuhr muss nicht abgesperrt werden und Kleinleckagen werden erkannt, jedoch kommt eine derartige Wasserschadenschutzvorrichtung bei der Erkennung kleinster Mikroleckagen an ihre Grenzen.

DE 1 943 021 A (=Referenz [7]) offenbart eine Einrichtung zur Messung des Durchflusses nach dem Wirkdruckverfahren. Insbesondere zeigt Referenz [7] einen einfach aufgebauten Durchflusssensor, wobei in einer Leitung eine Membran mit einer Durchgangsöffnung angeordnet ist. Bei einem Volumenstrom durch die Durchgangsöffnung wird eine Kraft auf die Membran erzeugt, wobei der Durchflusssensor Mittel zur Bestimmung dieser Kraft umfasst.

Die eingangs zitierte Referenz [1] beschreibt eine Leckwasser-Erfassungs- und Stoppeinrichtung, die zur Erkennung von kleinen und größeren Leckagemengen mehrere Durchflussmengenmesser aufweist. Es wird vorgeschlagen, zwei parallele Messpfade einzurichten, wobei der erste Messpfad einen ersten Durchflussmengenmesser mit kleinem Durchflussquerschnitt zur Erfassung kleiner Durchflussmengen enthält, während der zweite Messpfad mit einem zweiten Durchflussmengenmesser für größere Durchflüsse ausgestattet ist. Über ein Differenzdruckventil wird sichergestellt, dass kleine Durchflussmengen ausschließlich über den ersten Messpfad fließen. Beide Durchflussmengenmesser basieren auf bekannten Messmethoden. Es wird insbesondere vorgeschlagen, dass der Durchflussmengenmesser für die kleineren Durchflussmengen aus einem Ventilbzw. Schwebekörper-Strömungsmesser besteht.

Nachteilig ist, dass für die Erkennung und Messung von großen und kleinen Durchflüssen zwei klassische Durchflussmengenmesser benötigt werden. Eine ähnliche Vorrichtung wie Referenz [1] mit den eingangs definierten generischen Merkmalen offenbart auch die DE 10 2019 129 324 A1 (=Referenz [8]), welche die Detektion einer Leckage in einer Rohrleitung beschreibt.

Eine weitere Leckageschutzvorrichtung ist aus der US 2013/291974 A1 bekannt.

### Aufgabe der Erfindung

Demgegenüber ist es Aufgabe der vorliegenden Erfindung, eine Vorrichtung der eingangs definierten Art zum automatischen Verschließen einer Schlauch- und/oder Rohrleitung für den Transport flüssiger oder gasförmiger Medien auf technisch möglichst einfache und kostengünstige Weise so zu modifizieren, dass damit sowohl große als auch kleine Leckagen, insbesondere auch Mikroleckagen, erkannt und dadurch größere Wasserschäden wirksam verhindert werden können. Insbesondere soll die vorliegende Erfindung eine Leckageschutzvorrichtung vorstellen, die solche Leckagen schnell, zuverlässig und genau, aber dennoch mit geringem technischen Aufwand detektiert.

### Kurze Beschreibung der Erfindung

Diese Aufgabe wird erfindungsgemäß gelöst durch eine Leckageschutzvorrichtung mit den eingangs definierten Merkmalen, die dadurch gekennzeichnet ist, dass im Bypass eine Membran angeordnet ist, die eine Durchgangsöffnung aufweist, wobei bei einem Volumenstrom durch die Durchgangsöffnung eine Kraft auf die Membran erzeugt wird, dass die Leckageschutzvorrichtung Mittel zur direkten oder indirekten Bestimmung der Kraft auf die Membran umfasst, und dass die elektronische Steuervorrichtung so ausgestaltet ist, dass sie Messsignale von den Mitteln zur Bestimmung der Kraft auf die Membran erhält, und bei Über- bzw. Unterschreiten eines vorgebbaren Grenzwertes GW Steuersignale zum Schließen des Verschlussorgans an die Mittel zum Schließen des Verschlussorgans überträgt und/oder ein Leckage-Alarmsignal erzeugt.

Kleine Volumenströme fließen ausschließlich durch den Bypass und die Durchgangsöffnung der erfindungsgemäß vorgesehenen Membran. Es entsteht bereits bei kleinsten Volumenströmen im Bypass ein Druckabfall an der Membran, der eine Kraft auf die Membran erzeugt, die direkt oder indirekt erfasst werden kann. Die Größe der Kraft ist abhängig vom Volumenstrom.

Die Kraft kann direkt gemessen werden oder es wird eine von der Kraft abhängige Größe erfasst (indirekte Bestimmung). Beispiele für eine indirekte Bestimmung sind die Positionsbestimmung der Membran bei Auslenkung aus ihrer Ruhelage oder die Bestimmung des Druckabfalls an der Membran mittels Differenzdruckmessung.

Kleine Volumenströme, die vollständig durch den Bypass geleitet werden, können exakt bestimmt werden über die (vorbekannte) Abhängigkeit der Kraft auf die Membran vom Volumenstrom, so dass sich der Grenzwert GW beispielsweise auf einen definierten Volumenstrom bzw. auf ein definiertes Volumenstromintervall beziehen kann, der etwa als Tropfleckage interpretiert wird.

Bei größeren Durchflüssen, die nur zu einem kleinen, nicht genau bekannten Anteil durch den Bypass und ansonsten überwiegend durch den Hauptkanal fließen, kann der Durchfluss über die Kraft auf die Membran nicht exakt bestimmt werden. Es wird in diesem Fall jedoch zumindest erkannt, dass Wasser überhaupt fließt. Der Grenzwert GW kann sich dann beispielsweise auf eine definierte maximale Entnahmezeit beziehen, die nicht überschritten werden darf.

Verschlussorgan ist z.B. ein Kugelhahn, der mit einem Stellmotor geöffnet bzw. geschlossen wird, oder ein Magnetventil, das mit einem Elektromagnet betätigt wird.

Im Gegensatz zu einer vollständigen Schließung des Verschlussorgans zur Erkennung einer kleinen Leckage mittels Druckabfall (wie beim Stand der Technik) ist eine Grundversorgung der nachfolgenden Installation mit dem Medium immer sichergestellt.

Weitere, ganz erheblich Vorteile der erfindungsgemäßen Anordnung:

- schnelle Erfassung einer Kleinleckage mit hoher Empfindlichkeit: kleine und kleinste Volumenströme werden in Echtzeit erkannt,
- kein Absperren notwendig; die Wasserversorgung der nachfolgenden Installation ist ständig gewährleistet,
- keine Stagnation im Bypass, da durch diesen sowohl bei geringen Volumenströmen (Volumenstrom wird vollständig durch den Bypass geleitet), als auch bei großen Volumenströmen (ein kleiner Teil des Volumenstroms fließt durch den Bypass) Wasser fließt,
- einfacher, kostengünstiger Aufbau

Bevorzugte Ausführungsformen und Varianten der Erfindung

Eine Klasse von besonders bevorzugten Ausführungsformen der erfindungsgemäßen Leckageschutzvorrichtung zeichnet sich dadurch aus, dass eine Kraftmesszelle zur direkten Bestimmung der Kraft auf die Membran vorhanden ist.

Kraftmesszellen (="load cells") sind einfach im Aufbau und kostengünstig im Handel erhältlich. Sie nehmen außerdem wenig Platz in Anspruch und können problemlos in der Nähe der Membran angeordnet werden.

In bevorzugten Weiterbildungen dieser Klasse von Ausführungsformen ist ein Kraftüberträger vorgesehen, insbesondere ein Stift, der die Kraft von der Membran auf die Kraftmesszelle überträgt, wobei der Kraftüberträger beidseitig der Membran mit gleichem Dichtradius zum Atmosphärendruck angeordnet ist.

Dies führt dazu, dass die Druckkraft des absoluten Wasserdrucks ausgeglichen und nur die vom Differenzdruck resultierende Kraft auf die Kraftmesszelle übertragen und erfasst wird. Aus der Größe dieser Kraft lässt sich der Volumenstrom, der durch die Membran fließt, exakt ableiten. Voraussetzung ist, dass das Sperrventil im Hauptkanal geschlossen ist.

Bevorzugt sind auch Ausführungsformen der Erfindung, bei welchen die Membran mit einer Feder vorgespannt ist, wobei die Membran bei einem Volumenstrom durch die Durchgangsöffnung gegen die Federkraft beweglich ist, und die Leckageschutzvorrichtung Mittel zur Bestimmung der Position der Membran umfasst.

Bereits kleinste Volumenströme durch die Durchgangsöffnung der Membran erzeugen einen hinreichend großen Druckabfall an der Membran, um diese gegen die Federkraft auszulenken. Die Kraft auf die Membran wird folglich indirekt bestimmt über die Positionsbestimmung der ausgelenkten Membran.

Als Positionssensor kann beispielsweise ein Hall-Sensor eingesetzt werden.

Die Empfindlichkeit der Auslenkung der Membran ist abhängig vom Verhältnis (Fläche Durchgangsöffnung) / (Gesamtfläche Membran), von der Membranfeder sowie vom Membranmaterial.

Weitere vorteilhafte Ausführungsformen der Erfindung sind dadurch gekennzeichnet, dass die Kraft auf die Membran kalibrierbar ist.

Die Kraft auf die Membran wird bei geschlossenem Verschlussorgan kalibriert. Dies kann in Zeiten erfolgen, in denen keine Wasserentnahme zu erwarten ist, beispielsweise nachts. Hierzu wird die Kraft auf die Membran über eine Zeitdauer, z.B. 10 Minuten, direkt oder indirekt bestimmt und daraus ein mittlerer Nullwert gebildet.

Bevorzugt sind auch Ausführungsformen der Erfindung, bei welchen die Leckageschutzvorrichtung eine Zeitmesseinrichtung umfasst und dazu eingerichtet ist, die Kraft auf die Membran als zeitlichen Mittelwert zu bestimmen.

Es können somit kleinste Kräfte auf die Membran aufgrund eines minimalen Volumenstroms erkannt und vom "Grundrauschen" unterschieden werden. Der zeitliche Mittelwert ("mittlere Kraft") kann beispielsweise über eine Zeitdauer von einigen Sekunden gebildet werden. Durch einen Vergleich der so erhaltenen mittleren Kraft mit dem (kalibrierten) mittleren Nullwert können selbst kleinste Volumenströme bis 0,1 l/h erkannt werden und gegebenenfalls eine Mikroleckage signalisiert werden. Ein merklicher Wasserschaden tritt bei Mikroleckagen während der verhältnismäßig kurzen Zeitdauer, die für die Bestimmung der mittleren Kraft benötigt wird, nicht auf.

In weiteren vorteilhaften Ausführungsformen weist der Strömungskanal im Bypass vor und/oder hinter der Durchgangsöffnung der Membran mehrere Biegungen auf, die insbesondere als Mäanderscheibe ausgeführt sein können.

Auf diese Weise erhöht sich der Druckabfall an der Membran und die Empfindlichkeit zur Erfassung kleinster Volumenströme nimmt zu. Zur Erreichung einer hohen Empfindlichkeit darf die Durchgangsöffnung nicht so stark verkleinert werden, dass die Gefahr einer Verstopfung besteht, beispielsweise durch Fremdpartikel im Volumenstrom.

Es können auch mehrere Mäanderscheiben in Strömungsrichtung vor und/oder hinter der Membran angeordnet werden.

Bei besonders bevorzugten Ausführungsformen der erfindungsgemäßen Leckageschutzvorrichtung beträgt die Fläche der Durchgangsöffnung maximal 10% der Gesamtfläche der Membran und maximal 1% der Querschnittsfläche des Hauptkanals.

Abhängig vom Verhältnis (Fläche Durchgangsöffnung) zu (Gesamtfläche Membran) bewirken bereits kleinste Volumenströme durch die Durchgangsöffnung einen hinreichend große Druckabfall an der Membran und damit eine messbare Kraft auf die Membran. Dadurch können kleinste Volumenströme bis unter 1 l/h mit hoher Genauigkeit erfasst werden. Mit diesem geringen Anlaufwert können selbst kleine Tropfleckagen erkannt werden.

Eine weitere Klasse von besonders vorteilhaften Ausführungsformen ist dadurch gekennzeichnet, dass ein Volumenstromsensor zur Erfassung des Gesamtvolumenstroms vorhanden ist.

Große Volumenströme können dann ebenfalls exakt gemessen werden. Beispielsweise überwacht der Volumenstromsensor den maximal zulässigen Volumenstrom und/oder die maximal zulässige Entnahmemenge, die etwa bei einem Rohrbruch überschritten werden, während über die direkte oder indirekte Bestimmung der Kraft auf die Membran kleinste Volumenströme erkannt werden, die von einer Tropfleckage verursacht werden.

Vorteilhafte Weiterbildungen dieser Klasse von Ausführungsformen zeichnen sich dadurch aus, dass der Öffnungsschwellenwert $\Delta p_Ö$ des Sperrventils so gewählt wird, dass für den minimalen Volumenstrom $V_{HK,min}$ im Hauptkanal gilt:

$$V_{AW} \leq V_{HK,min} \leq 2V_{AW},$$

wobei $V_{AW}$ dem Anlaufwert des Volumenstromsensors entspricht.

Das Sperrventil ist zur Einstellung des Öffnungsschwellenwertes $\Delta p ö$ beispielsweise mit einer Federkraft beaufschlagt.

Handelsübliche Volumenstromsensoren haben einen Anlaufwert, der in der Größenordnung von etwa 1 bis 10 l/h liegt. Beträgt der Anlaufwert beispielsweise 5 l/h, so wird der Öffnungsschwellenwert $\Delta p ö$ des Sperrventils so gewählt, dass das Sperrventil bei einem Volumenstrom zwischen 5 und 10 l/h öffnet. Volumenströme im Hauptkanal sind dadurch groß genug, um vom Volumenstromsensor sicher erfasst zu werden. Andererseits fließen durch den Bypass nur kleine Volumenströme, so dass keine zu großen Kräfte auf die Membran wirken.

In den Rahmen der vorliegenden Erfindung fällt auch eine Wasserbehandlungsanlage, insbesondere eine Hauswasserinstallation, mit einer Vorrichtung zum automatischen Verschließen einer Schlauch- oder Rohrleitung der oben beschriebenen erfindungsgemäßen Art.

Des Weiteren fällt in den Rahmen der vorliegenden Erfindung auch ein Verfahren zum Betrieb einer Leckageschutzvorrichtung zum automatischen Verschließen einer Schlauch- oder Rohrleitung für den Transport flüssiger oder gasförmiger Medien der oben beschriebenen erfindungsgemäßen Art, welches dadurch gekennzeichnet ist, dass Messsignale von den Mitteln zur direkten oder indirekten Bestimmung der Kraft auf die Membran eine vorgegebene Zeitdauer t1 den vorgebbaren Grenzwert GW über- bzw. unterschreiten müssen, bevor die elektronische Steuervorrichtung Steuersignale zum Schließen des Verschlussorgans an die Mittel zum Schließen des Verschlussorgans überträgt und/oder ein Leckage-Alarmsignal erzeugt.

Damit können Fehlalarme, etwa ausgelöst durch kleine temporäre Druck- oder Temperaturschwankungen in der Hausinstallation, vermieden werden. Ebenso werden auf diese Weise kleine Wasserentnahmen, die von einer technischen Anwendung in der nachfolgenden Installation herrühren, nicht versehentlich einer Mikroleckage zugeschrieben.

Wasserschäden sind bei sehr kleinen Volumenströmen zunächst vernachlässigbar. Die Zeitdauer t1 beträgt üblicherweise eine Minute bis einen Tag.

Bei vorteilhaften Varianten dieses Verfahrens umfasst die direkte oder indirekte Bestimmung der Kraft auf die Membran folgende Schritte:

a) Schließen des Verschlussorgans,
b) Ermitteln der Kraft auf die Membran über eine vorgegebene Zeitdauer t2 und Bilden des zeitlichen Mittelwertes als mittlerer Nullwert,
c) Öffnen des Verschlussorgans und Abwarten einer vorgegebenen Zeitdauer t3,
d) Ermitteln der Kraft auf die Membran über eine vorgegebene Zeitdauer t4 und Bilden des zeitlichen Mittelwertes als mittlere Kraft auf die Membran,
e) Vergleich des mittleren Nullwertes und der mittleren Kraft auf die Membran.

Damit können kleinste Kräfte auf die Membran aufgrund eines minimalen Volumenstroms erkannt und von einer kurzeitigen Kraft auf die Membran, etwa aufgrund einer geringen Druck- oder Temperaturschwankung in der Hausinstallation, sicher unterschieden werden. Dadurch erhöht sich die Messempfindlichkeit zur Erkennung von Kleinleckagen.

Die Schritte a) und b) können durchgeführt werden, wenn kein regulärer Volumenstrom zu erwarten ist, beispielsweise nachts um 2 Uhr, etwa einmal die Woche. Die Zeitdauer t2 und die Zeitdauer t4 sind in der Regel gleich lang. Typisch sind Werte von 1 Minute bis 1 Stunde, insbesondere 5 bis 15 Minuten. Die Zeitdauer t3 kann etwas kürzer gewählt werden, etwa 5 Sekunden bis etwa 1 Minute.

Der Vergleich des mittleren Nullwertes und der mittleren Kraft auf die Membran erfolgt im einfachsten Fall über eine Differenzbildung. Ebenso können andere statistische Methoden angewendet werden.

Alternativ oder ergänzend wird bei weiteren vorteilhaften Verfahrensvarianten das Verschlussorgan geschlossen, wenn ein Volumenstrom registriert wird, wobei der mittlere Nullwert neu bestimmt wird, wenn der Volumenstrom nach Schließen des Verschlussorgans nicht abfällt.

Der registrierte Volumenstrom wird auf Plausibilität geprüft. Fällt dieser nach Schließen des Verschlussorgans nicht wie erwartet ab, so können Temperatur- oder Druckschwankungen im System vorliegen und einen (kleinen) Volumenstrom und damit eine Kleinleckage vortäuschen. Ist dies der Fall, wird der mittlere Nullwert neu bestimmt und den veränderten Druck- und Temperaturverhältnissen angepasst.

Bevorzugt ist auch eine Verfahrensvariante, bei welcher die elektronische Steuervorrichtung die Messsignale vom Volumenstromsensor auswertet, wenn der Volumenstromsensor einen Volumenstrom $\geq V_{AW}$ erfasst. Die elektronische Steuervorrichtung wertet die Messsignale von den Mitteln zur direkten oder indirekten Bestimmung der Kraft auf die Membran aus, wenn der Volumenstromsensor keinen Volumenstrom erfasst, wobei die elektronische Steuervorrichtung bei Über- bzw. Unterschreiten eines vorgebbaren Grenzwertes GW Steuersignale zum Schließen des Verschlussorgans an die Mittel zum Schließen des Verschlussorgans überträgt und/oder ein Leckage-Alarmsignal erzeugt.

Volumenströme bei größeren Leckagen liegen oberhalb des Anlaufwerts des Volumenstromsensors $V_{AW}$ und werden vom Volumenstromsensor erfasst. Sie erzeugen über dem Sperrventil einen Druckunterschied, der größer als der Öffnungsschwellenwert $\Delta p_{\ddot{O}}$ ist, so dass der Volumenstrom durch den Hauptkanal fließt. Große Volumenströme treten beispielsweise bei einem Wasserrohrbruch auf. Der Grenzwert GW kann den maximal zulässigen Volumenstrom, aber auch die maximal zulässige Entnahmedauer ohne Unterbrechung beschränken, etwa, wenn das Schließen eines Wasserhahns nach einer gewollten Wasserentnahme vergessen wird.

Sehr kleine Volumenströme, wie sie bei Kleinleckagen auftreten, liegen unterhalb des Anlaufwerts des Volumenstromsensors Vaw und werden vom Volumenstromsensor daher nicht erfasst. Das Sperrventil bleibt bei sehr kleinen Volumenströmen geschlossen, so dass der Volumenstrom in diesem Fall vollständig durch die Durchgangsöffnung der Membran im Bypass fließt. Da die Durchgangsöffnung klein ist im Verhältnis zur Membranfläche, erzeugt bereits ein sehr kleiner Volumenstrom einen hinreichend großen Druckabfall und somit eine Kraft auf die Membran, um diese beispielsweise mit einer Kraftmesszelle zu erfassen oder die Membran merklich gegen eine Federkraft auszulenken. Kleinleckagen mit sehr kleinen Volumenströmen treten in Hausinstallationen typischerweise bei tropfenden Wasserhähnen, undichten Spülkästen oder bei Leitungen mit kleineren Korrosionsschäden auf.

Eine weitere vorteilhafte Verfahrensvariante zeichnet sich dadurch aus, dass der Grenzwert GW für die Auswertung von Messsignalen von den Mitteln zur direkten oder indirekten Bestimmung der Kraft auf die Membran und der Grenzwert GW für die Auswertung der Messsignale vom Volumenstromsensor unterschiedlich sind.

So kann beispielsweise der Grenzwert GW für die Messsignale vom Volumenstromsensor so gewählt werden, dass der maximale Volumenstrom oder die maximale Entnahmemenge begrenzt wird, um die Hausinstallation bei einer Großleckage zu schützen, während der entsprechende Grenzwert GW für die Messsignale von den Mitteln zur direkten oder indirekten Bestimmung der Kraft auf die Membran klein gewählt wird, um etwa Tropfleckagen zu bewerten.

Ebenso ist ein Grenzwert GW für die maximal zulässige Entnahmezeit ohne Unterbrechung abhängig davon, ob eine Großleckage (Erfassung über den Volumenstromsensor) oder eine Kleinleckage (Erfassung über die Kraft auf die Membran oder eine davon abhängige Größe) ursächlich ist.

Vorteilhaft ist auch eine Verfahrensvariante, bei welcher das Verschlussorgan sofort schließt, wenn eine Leckage mittels der Messsignale vom Volumenstromsensor detektiert wird. Es wird lediglich ein Leckage-Alarmsignal erzeugt ohne sofortiges Schließen des Verschlussorgans, wenn eine Kleinleckage mittels der Messsignale von den Mitteln zur direkten oder indirekten Bestimmung der Kraft auf die Membran detektiert wird.

Im ersteren Fall ist von einer größeren Leckage auszugehen und es besteht die Gefahr eines erheblichen Wasserschadens. Das Verschlussorgan schließt sofort, um einen solchen Wasserschaden zu verhindern. Zusätzlich kann ein akustisches und/oder optisches Alarmsignal erfolgen, oder ein Funksignal auf ein Handy oder an eine Leitwarte übertragen werden.

Bei Kleinleckagen kann kein großer Wasserschaden in kurzer Zeit entstehen. Hier ist es ausreichend, die Leckage zu signalisieren, ohne dass die Wasserversorgung der nachfolgenden Hausinstallation sofort unterbrochen wird. Ein Nutzer kann dann überprüfen, welcher Schaden vorliegt und gegebenenfalls weitere Schritte veranlassen.

Eine weitere bevorzugte Verfahrensvariante ist dadurch gekennzeichnet, dass der Grenzwert GW abhängig ist von der Anzahl von Wohnungen, die der nachfolgenden Hausinstallation zugeordnet sind, und/oder von der Anzahl von Personen, welche die nachfolgende Hausinstallation benutzen.

Im Vergleich zu Einfamilienhäusern finden in Mehrfamilienhäusern deutlich mehr Wasserentnahmen statt. Diese können zeitgleich oder nacheinander auftreten, so dass in Mehrfamilienhäusern der Grenzwert GW für einen maximal zulässigen Volumenstrom, für die maximal zulässige Entnahmemenge und/oder für die maximal zulässige Entnahmezeit ohne Unterbrechung entsprechend angepasst und erhöht wird.

Die Anzahl der Wohnungen bzw. Personen, für die die Leckageschutzvorrichtung vorgesehen ist, kann beispielsweise vorab eingegeben werden.

Schließlich bewährt sich in der Praxis eine Vorgehensweise, die dadurch gekennzeichnet, dass das individuelle Entnahmeverhalten der Hausinstallation in einer Lernphase ermittelt und der Grenzwert GW dem individuellen Entnahmeverhalten angepasst wird.

Die Lernphase kann beispielsweise einen Tag bis eine Woche dauern. Durch die Anpassung können typische Verbrauchsgewohnheiten erkannt und somit Fehldiagnosen vermieden werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung, welche durch die angefügten Patentansprüche definiert ist.

Detaillierte Beschreibung der Erfindung und Zeichnung

Die Erfindung ist in der Zeichnung dargestellt und wird anhand von Ausführungsbeispielen näher erläutert. Es zeigen:

Fig. 1    ein prinzipielles Aufbau- und Funktionsschema einer Ausführungsform der erfindungsgemäßen Leckageschutzvorrichtung zum Verschließen einer Schlauch- und/oder Rohrleitung für den Transport flüssiger oder gasförmiger Medien für die Erkennung von Kleinleckagen und zum Abwenden von Wasserschäden mit Membran und indirekter Kraftbestimmung mittels Positionsbestimmung;

Fig. 2    einen schematischen Vertikalschnitt durch eine mögliche Ausführungsform einer federbelasteten Membran mit Durchgangsöffnung zum Einsatz in einer erfindungsgemäßen Leckageschutzvorrichtung;

Fig. 3    ein Verlaufsdiagramm für die Größe der Membran-Auslenkung in Abhängigkeit vom Volumenstrom beim Betrieb einer erfindungsgemäßen Vorrichtung;

Fig. 4    einen schematischen Vertikalschnitt durch einen Teil einer mögliche Ausführungsform der erfindungsgemäßen Vorrichtung mit Membran und Mäanderscheiben sowie Kraftmesszelle zur direkten Kraftbestimmung;

Fig. 5    eine Mäanderscheibe in schematischer Draufsicht in Strömungsrichtung des Fluids; und

Fig. 6    eine Diagramm-Darstellung des Verlaufs der Kraft auf die erfindungsgemäß eingesetzte Membran in Abhängigkeit vom Volumenstrom beim Betrieb einer erfindungsgemäßen Vorrichtung.

Die vorliegende Erfindung befasst sich allgemein mit dem Leckageschutz in Systemen von Schlauch- und/oder Rohrleitungen für den Transport flüssiger oder gasförmiger Medien, insbesondere Fluiden wie Wasser. Besondere Anwendung findet die Erfindung auf dem Gebiet der Hauswasserinstallationen. Sie betrifft eine neuartige Betriebsweise sowie eine entsprechende Ausgestaltung einer solchen Wasserinstallation mit dem Ziel einer Verhinderung oder wenigstens Minimierung von Wasserschäden durch Leckage-Ereignisse.

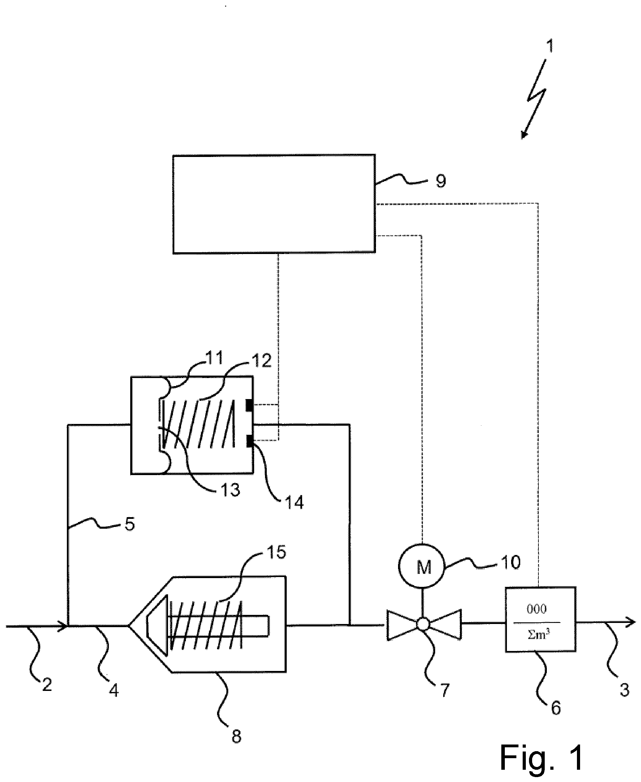

Eine mögliche Ausführungsform einer erfindungsgemäßen **Leckageschutzvorrichtung 1** zum automatischen Verschließen einer Schlauch- und/oder Rohrleitung für den Transport flüssiger oder gasförmiger Medien, insbesondere Wasser ist als Prinzip- beziehungsweise Funktionsschema in **Fig. 1** dargestellt.

Die Leckageschutzvorrichtung 1 umfasst:

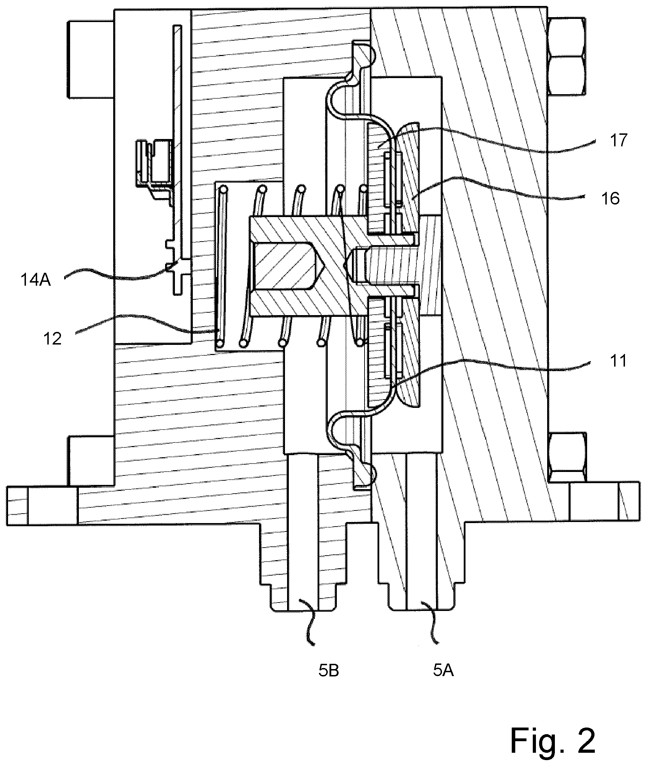

- eine **zentrale Zuleitung 2,**
- einen zwischen der zentralen Zuleitung 2 und einer nachfolgenden Hausinstallation angeordneten **Hauptkanal 4** und einen **Bypass 5** mit einem **Bypass-Zulauf 5A** und einem **Bypass-Ablauf 5B** (siehe Fig. 2),
- ein **Verschlussorgan 7** zur Unterbrechung des Gesamtvolumenstroms,
- ein **Sperrventil 8** im Hauptkanal 4, das geschlossen ist, wenn der Druckunterschied über dem Sperrventil 8 kleiner ist als ein Öffnungsschwellenwert $\Delta p\ddot{o}$, und geöffnet ist, wenn der Druckunterschied über dem Sperrventil 8 größer ist als der Öffnungsschwellenwert $\Delta p\ddot{o}$, wobei bei geschlossenem Sperrventil 8 ein Volumenstrom vollständig durch den Bypass 5 geleitet wird, sowie,
- eine **elektronische Steuervorrichtung 9** und Mittel zum Schließen bzw. Öffnen des Verschlussorgans 7.

Am strömungsseitig anderen Ende der Leckageschutzvorrichtung 1 befindet sich ein **Ablauf 3** zur nachfolgenden Hausinstallation.

Die erfindungsgemäße Anordnung zeichnet sich gegenüber herkömmlichen Vorrichtungen nach dem Stand der Technik dadurch aus, dass im Bypass 5 eine **Membran 11** angeordnet ist, die eine **Durchgangsöffnung 13** aufweist, wobei bei einem Volumenstrom durch die Durchgangsöffnung 13 eine Kraft auf die Membran 11 erzeugt wird, dass die Leckageschutzvorrichtung 1 Mittel zur direkten oder indirekten Bestimmung der Kraft auf die Membran 11 umfasst, und dass die elektronische Steuervorrichtung 9 so ausgestaltet ist, dass sie Messsignale von den Mitteln zur Bestimmung der Kraft auf die Membran 11 erhält, und bei Über- bzw. Unterschreiten eines vorgebbaren Grenzwertes GW Steuersignale zum Schließen des Verschlussorgans 7 an die Mittel zum Schließen des Verschlussorgans 7 -im gezeigten Ausführungsbeispiel ein **Stellmotor 10-** überträgt und/oder ein Leckage-Alarmsignal erzeugt.

Die Fläche der Durchgangsöffnung 13 beträgt maximal 10% der Gesamtfläche der Membran 11 und maximal 1% der Querschnittsfläche des Hauptkanals 4.

Ein **Volumenstromsensor 6** erfasst den Gesamtvolumenstrom durch die Leckageschutzvorrichtung 1.

Die Membran 11 ist mit einer **Feder 12** vorgespannt und bei einem Volumenstrom durch die Durchgangsöffnung 13 gegen die Federkraft beweglich. Die Kraft auf die Membran 11 ist kalibrierbar.

Möglich ist auch der Einsatz einer -in der vorliegenden Zeichnung allerdings nicht eigens dargestellten- Zeitmesseinrichtung, die dazu eingerichtet ist, die Kraft auf die Membran 11 als zeitlichen Mittelwert zu bestimmen.

Außerdem umfasst die Leckageschutzvorrichtung 1 **Mittel 14 zur Bestimmung der Position** der Membran 11, beispielsweise in Form eines **Hall-Sensors 14A,** wie in Fig. 2 angedeutet.

Der Öffnungsschwellenwert $\Delta p_{\ddot{O}}$ des (im gezeigten Ausführungsbeispiel mit einer **Feder 15** vorgespannten) Sperrventils 8 wird so gewählt, dass für den minimalen Volumenstrom im Hauptkanal 4 $V_{HK,min}$ gilt: $V_{AW} \leq V_{HK,min} \leq 2V_{AW}$, wobei $V_{AW}$ dem Anlaufwert des Volumenstromsensors 6 entspricht.

**Fig. 2** zeigt in einem schematischen Vertikalschnitt durch einen Teil einer möglichen Ausführungsform der Leckageschutzvorrichtung 1 eine detaillierte Ansicht der federbelasteten Membran 11 mit Durchgangsöffnung 13. Man erkennt den Bypass-Zulauf 5A und den Bypass-Ablauf 5B sowie die Vorspannfeder 12 und den Hall-Sensor 14A.

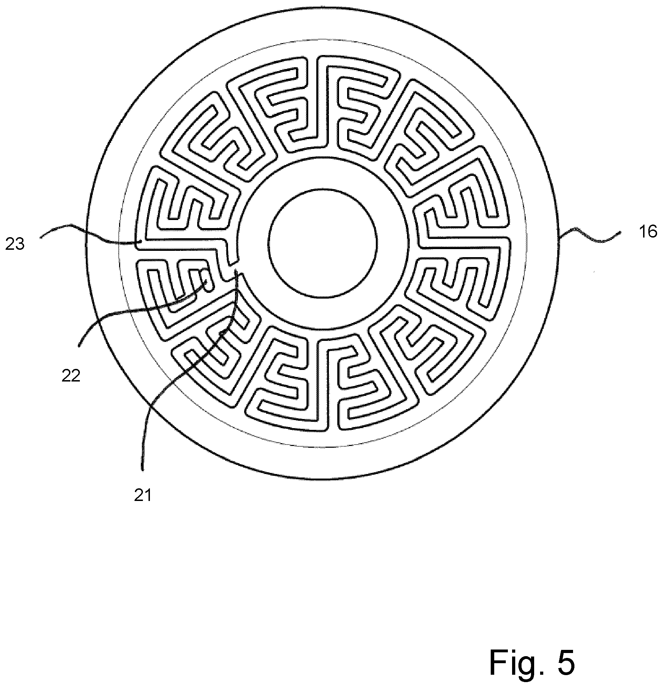

In Strömungsrichtung vor und hinter der Membran 11 sind eine **erste Mäanderscheibe 16** und eine **zweite Mäanderscheibe 17** angeordnet, deren Details wiederum in Fig. 5 gezeigt sind.

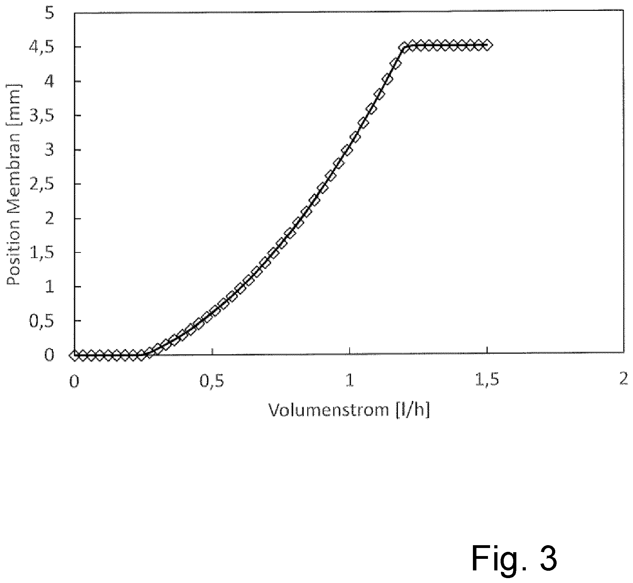

Die Diagramm-Darstellung von **Fig. 3** zeigt ein Verlaufsdiagramm für die Größe der Membran-Auslenkung in Abhängigkeit vom Volumenstrom beim Betrieb einer erfindungsgemäßen Leckageschutzvorrichtung 1.

Bei Volumenströmen bis ca. 0,25 l/h wird aufgrund der Vorspannung der Feder 12 keine Auslenkung der Membran 11 aus ihrer Ruheposition (Nullwert) registriert. Bei weiter zunehmenden Volumenströmen wird die Membran 11 gegen die Federkraft aus ihrer Ruhelage ausgelenkt und die Position der Membran 11 (hier mittels des Hall-Sensors 14A) detektiert.

Für den Bereich 0,25 l/h bis etwa 1,2 l/h ist die Auslenkung ungefähr proportional zum Quadrat des Volumenstroms. In diesem Bereich können beispielsweise Tropfleckagen sehr gut erkannt werden. Das Intervall dieses Bereichs kann durch die Art der Feder 12, die Auswahl der Membran 11 und die Größe der Durchgangsöffnung 13 beeinflusst werden. Bei größeren Volumenströmen wird eine weitere Auslenkung der Membran 11 begrenzt, z.B. mittels eines Anschlags, um eine Beschädigung der Membran 11 zu verhindern. Größere Volumenströme fließen dann durch den Hauptkanal 4 und können dort mit dem Volumenstromsensor 6 erfasst werden.

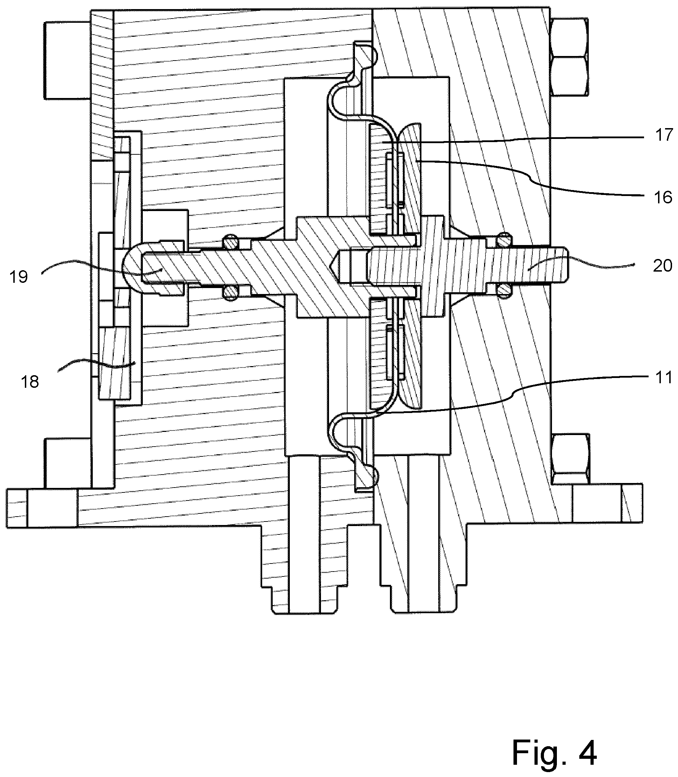

**Fig. 4** zeigt einen schematischen Vertikalschnitt durch ein Detail einer möglichen Ausführungsform einer erfindungsgemäßen Leckageschutzvorrichtung 1 mit Membran 11 und Mäanderscheiben 16; 17 sowie eine **Kraftmesszelle 18** zur direkten Bestimmung der Kraft auf die Membran 11. Ein **Kraftüberträger 19,** insbesondere ein Stift, überträgt die Kraft von der Membran 11 auf die Kraftmesszelle 18, wobei der Kraftüberträger 19 beidseitig der Membran 11 mit gleichem Dichtradius zum Atmosphärendruck angeordnet ist. In Strömungsrichtung gegenüber dem Kraftüberträger 19 ist ein **Element 20 zum Kraftausgleich** angeordnet.

**Fig. 5** zeigt eine mögliche Ausführungsform der Mäanderscheibe 16 in schematischer Draufsicht in Strömungsrichtung des Fluids. Der Strömungskanal im Bypass 5 vor und/oder hinter der Durchgangsöffnung 13 der Membran 11 weist mehrere mäandrierende **Biegungen 23 auf.**

Wasser fließt über den **Eingang 21** in die Biegungen 23, durchströmt diese und verlässt die Mäanderscheibe 16 über den **Durchtritt 22.** Die Fließrichtung kann auch umgekehrt sein. Dann strömt Wasser über den Durchtritt 22 in die Biegungen 23 bis zum **Ausgang 21.**

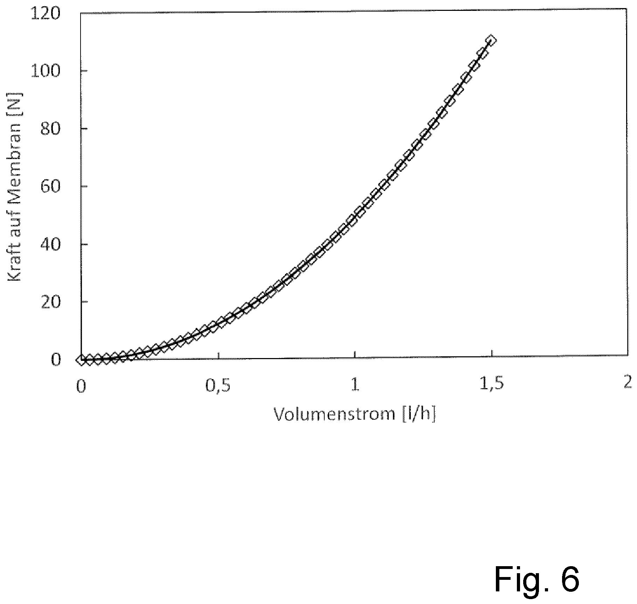

**Fig. 6** schließlich zeigt in einer Diagramm-Darstellung den Verlauf der Kraft auf die erfindungsgemäß eingesetzte Membran 11 in Abhängigkeit vom Volumenstrom beim Betrieb einer erfindungsgemäßen Leckageschutzvorrichtung 1. Im dargestellten Bereich ist die Kraft auf die Membran 11 ungefähr proportional zum Volumenstrom im Quadrat.

## Bezugszeichenliste

1 Leckageschutzvorrichtung
2 zentrale Zuleitung
3 Ablauf zur nachfolgenden Hausinstallation

| | |
|---|---|
| 4 | Hauptkanal |
| 5 | Bypass |
| 5A | Bypass-Zulauf |
| 5B | Bypass-Ablauf |
| 6 | Volumenstromsensor |
| 7 | Verschlussorgan |
| 8 | Sperrventil |
| 9 | elektronische Steuervorrichtung |
| 10 | Stellmotor |
| 11 | Membran |
| 12 | Vorspannfeder der Membran |
| 13 | Durchgangsöffnung |
| 14 | Mittel zur Bestimmung der Position der Membran |
| 14A | Hallsensor |
| 15 | Vorspannfeder des Sperrventils |
| 16; 17 | Mäanderscheibe |
| 18 | Kraftmesszelle |
| 19 | Kraftüberträger, insbesondere Stift |
| 20 | Element zum Kraftausgleich |
| 21 | Eingang/Ausgang Strömungskanal durch die Mäanderscheibe |
| 22 | Durchtritt aus der Mäanderscheibe |
| 23 | Biegungen des Strömungskanals durch die Mäanderscheibe |

**Referenzliste:**

Für die Beurteilung der Patentfähigkeit in Betracht gezogene Druckschriften:

[1] DE 197 06 564 A1
[2] WO 2014/029699 A1
[3] WO 2012/098038 A1
[4] DE 10 2018 119 815 A1
[5] EP 3 032 236 A1
[6] EP 3 848 690 B1
[7] DE 1 943 021 A
[8] DE 10 2019 129 324 A1

**Patentansprüche**

1. Leckageschutzvorrichtung (1) zum automatischen Verschließen einer Schlauch- oder Rohrleitung für den Transport flüssiger oder gasförmiger Medien, insbesondere Wasser, umfassend

   - eine zentrale Zuleitung (2),
   - einen zwischen der zentralen Zuleitung (2) und einer nachfolgenden Hausinstallation angeordneten Hauptkanal (4) und einen Bypass (5),
   - ein Verschlussorgan (7) zur Unterbrechung des Gesamtvolumenstroms,
   - ein Sperrventil (8) im Hauptkanal (4), das geschlossen ist, wenn der Druckunterschied über dem Sperrventil (8) kleiner ist als ein Öffnungsschwellenwert $\Delta p_{\ddot{O}}$, und geöffnet ist, wenn der Druckunterschied über dem Sperrventil (8) größer ist als der Öffnungsschwellenwert $\Delta p_{\ddot{O}}$, wobei bei geschlossenem Sperrventil (8) ein Volumenstrom vollständig durch den Bypass (5) geleitet wird, sowie,
   - eine elektronische Steuervorrichtung (9) und Mittel zum Schließen bzw. Öffnen des Verschlussorgans (7),
   wobei im Bypass (5) eine Membran (11) angeordnet ist,
   **dadurch gekennzeichnet, dass** die Membran (11) die eine Durchgangsöffnung (13) aufweist, wobei bei einem Volumenstrom durch die Durchgangsöffnung (13) eine Kraft auf die Membran (11) erzeugt wird, dass die Leckageschutzvorrichtung (1) Mittel zur direkten oder indirekten Bestimmung der Kraft auf die Membran (11) umfasst,
   und dass die elektronische Steuervorrichtung (9) so ausgestaltet ist, dass sie Messsignale von den Mitteln zur Bestimmung der Kraft auf die Membran (11) erhält, und bei Über- bzw. Unterschreiten eines vorgebbaren Grenzwertes GW Steuersignale zum Schließen des Verschlussorgans (7) an die Mittel zum Schließen des Verschlussorgans (7) überträgt und/oder ein Leckage-Alarmsignal erzeugt.

2. Vorrichtung nach Anspruch 1, **dadurch gekennzeichnet, dass** eine Kraftmesszelle (18) zur direkten Bestimmung der Kraft auf die Membran (11) vorhanden ist, und vorzugsweise, dass ein Kraftüberträger (19), insbesondere ein Stift, vorgesehen ist, der die Kraft von der Membran (11) auf die Kraftmesszelle (18) überträgt, wobei der Kraftüberträger (19) beidseitig der Membran (11) mit gleichem Dichtradius zum Atmosphärendruck angeordnet ist.

3. Vorrichtung nach Anspruch 1, **dadurch gekennzeichnet, dass** die Membran (11) mit einer Feder (12) vorgespannt ist, wobei die Membran (11) bei einem Volumenstrom durch die Durchgangsöffnung (13) gegen die Federkraft beweglich ist, und dass die Leckageschutzvorrichtung (1) Mittel (14) zur Bestimmung der Position der Membran (11) umfasst.

4. Vorrichtung nach einem der vorhergehenden Ansprüche, **dadurch gekennzeichnet, dass** die Kraft auf die Membran (11) kalibrierbar ist.

5. Vorrichtung nach einem der vorhergehenden Ansprüche, **dadurch gekennzeichnet, dass** die Leckageschutzvorrichtung (1) eine Zeitmesseinrichtung umfasst und dazu eingerichtet ist, die Kraft auf die Membran (11) als zeitlichen Mittelwert zu bestimmen.

6. Vorrichtung nach einem der vorhergehenden Ansprüche, **dadurch gekennzeichnet, dass** der Strömungskanal im Bypass (5) vor und/oder hinter der Durchgangsöffnung (13) der Membran (11) mehrere Biegungen aufweist, insbesondere als Mäanderscheibe (16; 17) ausgeführt ist.

7. Vorrichtung nach einem der vorhergehenden Ansprüche, **dadurch gekennzeichnet, dass** die Fläche der Durchgangsöffnung (13) maximal 10% der Gesamtfläche der Membran (11) und maximal 1 % der Querschnittsfläche des Hauptkanals (4) beträgt.

8. Vorrichtung nach einem der vorhergehenden Ansprüche, **dadurch gekennzeichnet, dass** ein Volumenstromsensor (6) zur Erfassung des Gesamtvolumenstroms vorhanden ist, und dass insbesondere der Öffnungsschwellenwert $\Delta p_{\ddot{O}}$ des Sperrventils (8) so gewählt wird, dass für den minimalen Volumenstrom im Hauptkanal (4) $V_{HK,min}$ gilt:

$$V_{AW} \leq V_{HK,min} \leq 2V_{AW},$$

wobei $V_{AW}$ dem Anlaufwert des Volumenstromsensors (6) entspricht.

9. Verfahren zum Betrieb einer Leckageschutzvorrichtung (1) zum automatischen Verschließen einer Schlauch- oder Rohrleitung für den Transport flüssiger oder gasförmiger Medien nach einem der vorhergehenden Ansprüche, **dadurch gekennzeichnet, dass** Messsignale von den Mitteln zur direkten oder indirekten Bestimmung der Kraft auf die Membran (11) eine vorgegebene Zeitdauer t1 den vorgebbaren Grenzwert GW über- bzw. unterschreiten müssen, bevor die elektronische Steuervorrichtung (9) Steuersignale zum Schließen des Verschlussorgans (7) an die Mittel zum Schließen des Verschlussorgans (7) überträgt und/oder ein Leckage-Alarmsignal erzeugt.

10. Verfahren nach Anspruch 9, **dadurch gekennzeichnet, dass** die direkte oder indirekte Bestimmung der Kraft auf die Membran (11) folgende Schritte umfasst:

   a) Schließen des Verschlussorgans (7),
   b) Ermitteln der Kraft auf die Membran (11) über eine vorgegebene Zeitdauer t2 und Bilden des zeitlichen Mittelwertes als mittlerer Nullwert,
   c) Öffnen des Verschlussorgans (7) und Warten für eine vorgegebene Zeitdauer t3,
   d) Ermitteln der Kraft auf die Membran (11) über eine vorgegebene Zeitdauer t4 und Bilden des zeitlichen Mittelwertes als mittlere Kraft auf die Membran (11),
   e) Vergleich des mittleren Nullwertes und der mittleren Kraft auf die Membran (11).

11. Verfahren nach Anspruch 9 oder 10, **dadurch gekennzeichnet, dass** das Verschlussorgan (7) geschlossen wird, wenn ein Volumenstrom registriert wird, wobei der mittlere Nullwert neu bestimmt wird, wenn der Volumenstrom nach Schließen des Verschlussorgans (7) nicht abfällt.

12. Verfahren nach einem der Ansprüche 9 bis 11, **dadurch gekennzeichnet, dass** die elektronische Steuervorrichtung (9) die Messsignale vom Volumenstromsensor (6) auswertet, wenn der Volumenstromsensor (6) einen Volumenstrom $\geq V_{AW}$ erfasst, und dass die elektronische Steuervorrichtung (9) die Messsignale von den Mitteln zur direkten oder indirekten Bestimmung der Kraft auf die Membran (11) auswertet, wenn der Volumenstromsensor (6) keinen Volumenstrom erfasst, wobei die elektronische Steuervorrichtung (9) bei Über- bzw. Unterschreiten eines vorgebbaren Grenzwertes GW Steuersignale zum Schließen des Verschlussorgans (7) an die Mittel zum Schließen des Verschlussorgans (7) überträgt und/oder ein Leckage-Alarmsignal erzeugt.

13. Verfahren nach einem der Ansprüche 9 bis 12, **dadurch gekennzeichnet, dass** der Grenzwert GW für die Auswertung von Messsignalen von den Mitteln zur direkten oder indirekten Bestimmung der Kraft auf die Membran (11) und der Grenzwert GW für die Auswertung der Messsignale vom Volumenstromsensor (6) unterschiedlich sind.

14. Verfahren nach einem der Ansprüche 9 bis 13, **dadurch gekennzeichnet, dass** der Grenzwert GW abhängig ist von der Anzahl von Wohnungen, die der nachfolgenden Hausinstallation zugeordnet sind, und/oder von der Anzahl von Personen, welche die nachfolgende Hausinstallation benutzen.

15. Verfahren nach einem der Ansprüche 9 bis 14, **dadurch gekennzeichnet, dass** das individuelle Entnahmeverhalten der Hausinstallation in einer Lernphase ermittelt und der Grenzwert GW dem individuellen Entnahmeverhalten angepasst wird.

**Claims**

1. Leakage protection device (1) for automatically closing a hose line or pipe for transporting liquid or gaseous media, in particular water, comprising

   - a central supply line (2),
   - a main channel (4) arranged between the central supply line (2) and a subsequent house installation, and a bypass (5),
   - a closure member (7) for interrupting the total volume flow,
   - a shut-off valve (8) in the main channel (4) which is closed when the pressure difference across the shut-off valve (8) is less than an opening threshold value Δpö, and is open when the pressure difference across the shut-off valve (8) is greater than the opening threshold value Δpö, a volume flow being guided completely through the bypass (5) when the shut-off valve (8) is closed, and

- an electronic control device (9) and means for closing and opening the closure member (7), a membrane (11) being arranged in the bypass (5),

**characterized in that** the membrane (11) has a through-opening (13), a force being generated on the membrane (11) when there is a volume flow through the through-opening (13),

**in that** the leakage protection device (1) comprises means for directly or indirectly determining the force on the membrane (11),

**and in that** the electronic control device (9) is designed such that it receives measurement signals from the means for determining the force on the membrane (11) and, when a predeterminable limit value GW is exceeded or not met, transmits control signals for closing the closure member (7) to the means for closing the closure member (7) and/or generates a leakage alarm signal.

2. Device according to claim 1, **characterized in that** a force measuring cell (18) is present for directly determining the force on the membrane (11), and preferably **in that** a force transmitter (19), in particular a pin, is provided which transmits the force from the membrane (11) to the force measuring cell (18), the force transmitter (19) being arranged on both sides of the membrane (11) with the same sealing radius to the atmospheric pressure.

3. Device according to claim 1, **characterized in that** the membrane (11) is preloaded by means of a spring (12), the membrane (11) being movable against the spring force when there is a volume flow through the through-opening (13), **and in that** the leakage protection device (1) comprises means (14) for determining the position of the membrane (11).

4. Device according to any of the preceding claims, **characterized in that** the force on the membrane (11) can be calibrated.

5. Device according to any of the preceding claims, **characterized in that** the leakage protection device (1) comprises a time measuring means and is designed to determine the force on the membrane (11) as a temporal mean value.

6. Device according to any of the preceding claims, **characterized in that** the flow channel in the bypass (5) has a plurality of bends in front of and/or behind the through-opening (13) of the membrane (11), in particular is designed as a meander disk (16; 17).

7. Device according to any of the preceding claims, **characterized in that** the area of the through-opening (13) is a maximum of 10% of the total area of the membrane (11) and a maximum of 1 % of the cross-sectional area of the main channel (4).

8. Device according to any of the preceding claims, **characterized in that** a volume flow sensor (6) is provided for detecting the total volume flow, **and in that** in particular the opening threshold value Δpö of the shut-off valve (8) is selected such that the following applies for the minimum volume flow in the main channel (4) $V_{HK,min}$:

$$V_{AW} \leq V_{HK,min} \leq 2V_{AW},$$

where $V_{AW}$ corresponds to the starting value of the volume flow sensor (6).

9. Method for operating a leakage protection device (1) for automatically closing a hose line or pipeline for transporting liquid or gaseous media according to any of the preceding claims, **characterized in that** measurement signals from the means for directly or indirectly determining the force on the membrane (11) must exceed or not meet the predeterminable limit value GW for a predetermined time period t1 before the electronic control device (9) transmits control signals for closing the closure member (7) to the means for closing the closure member (7) and/or generates a leakage alarm signal.

10. Method according to claim 9, **characterized in that** directly or indirectly determining the force on the membrane (11) comprises the following steps:

a) closing the closure member (7),
b) determining the force on the membrane (11) over a predetermined time period t2 and forming the temporal mean value as a mean zero value,
c) opening the closure member (7) and waiting for a predetermined time period t3,
d) determining the force on the membrane (11) over a predetermined time period t4 and forming the temporal mean value as the mean force on the membrane (11),
e) comparing the mean zero value and the mean force on the membrane (11).

**11.** Method according to either claim 9 or claim 10, **characterized in that** the closure member (7) is closed when a volume flow is registered, the mean zero value being reascertained if the volume flow does not drop after closing the closure member (7).

**12.** Method according to any of claims 9 to 11, **characterized in that** the electronic control device (9) evaluates the measurement signals from the volume flow sensor (6) when the volume flow sensor (6) detects a volume flow $\geq V_{AW}$, **and in that** the electronic control device (9) evaluates the measurement signals from the means for directly or indirectly determining the force on the membrane (11) when the volume flow sensor (6) does not detect a volume flow, the electronic control device (9) transmitting control signals for closing the closure member (7) to the means for closing the closure member (7) when a predeterminable limit value GW is exceeded or not met and/or generating a leakage alarm signal.

**13.** Method according to any of claims 9 to 12, **characterized in that** the limit value GW for evaluating measurement signals from the means for directly or indirectly determining the force on the membrane (11) and the limit value GW for evaluating the measurement signals from the volume flow sensor (6) are different.

**14.** Method according to any of claims 9 to 13, **characterized in that** the limit value GW is dependent on the number of apartments assigned to the subsequent house installation and/or on the number of persons who use the subsequent house installation.

**15.** Method according to any of claims 9 to 14, **characterized in that** the individual intake behavior of the house installation is determined in a learning phase and the limit value GW is adapted to the individual intake behavior.

**Revendications**

**1.** Dispositif de protection contre les fuites (1) permettant de fermer automatiquement une conduite souple ou un tuyau destiné(e) au transport de fluides liquides ou gazeux, en particulier d'eau, comprenant

- une conduite d'alimentation centrale (2),
- un canal principal (4) agencé entre la conduite d'alimentation centrale (2) et une installation domestique située en aval et une dérivation (5),
- un organe de fermeture (7) permettant d'interrompre le débit volumétrique total,
- une vanne d'arrêt (8) située dans le canal principal (4), qui est fermée lorsque la différence de pression par rapport à la vanne d'arrêt (8) est inférieure à une valeur de seuil d'ouverture Δpö, et qui est ouverte lorsque la différence de pression par rapport à la vanne d'arrêt (8) est supérieure à la valeur de seuil d'ouverture Δpö, un débit volumétrique étant entièrement dirigé à travers la dérivation (5) lorsque la vanne d'arrêt (8) est fermée, et,
- un dispositif de commande électronique (9) et des moyens permettant de fermer ou d'ouvrir l'organe de fermeture (7),
une membrane (11) étant agencée dans la dérivation (5),
**caractérisé en ce que** la membrane (11) présente une ouverture de passage (13), une force étant générée sur la membrane (11) lorsqu'un débit volumétrique traverse l'ouverture de passage (13),
**en ce que** le dispositif de protection contre les fuites (1) comprend des moyens permettant de déterminer directement ou indirectement la force exercée sur la membrane (11),
et **en ce que** le dispositif de commande électronique (9) est conçu de manière à recevoir des signaux de mesure en provenance des moyens permettant de déterminer la force exercée sur la membrane (11), et, en cas de dépassement ou de sous-dépassement d'une valeur limite GW pouvant être prédéfinie, est conçu de manière à transmettre des signaux de commande de fermeture de l'organe de fermeture (7) aux moyens permettant de fermer l'organe de fermeture (7) et/ou à générer un signal d'alarme de fuite.

**2.** Dispositif selon la revendication 1, **caractérisé en ce qu'**une cellule de mesure de force (18) permettant de déterminer directement la force exercée sur la membrane (11) est présente, et de manière préférée **en ce qu'**un transmetteur de force (19), en particulier une broche, transmettant la force depuis la membrane (11) jusqu'à la cellule de mesure de force (18) est fourni, le transmetteur de force (19) étant agencé des deux côtés de la membrane (11) avec le même rayon d'étanchéité par rapport à la pression atmosphérique.

**3.** Dispositif selon la revendication 1, **caractérisé en ce que** la membrane (11) est précontrainte par un ressort (12), la membrane (11) étant mobile à l'encontre de la force de ressort lorsqu'un débit volumétrique traverse l'ouverture de passage (13), et **en ce que** le dispositif de protection contre les fuites (1) comprend des moyens (14) permettant de déterminer la position de la membrane (11).

**4.** Dispositif selon l'une quelconque des revendications précédentes, **caractérisé en ce que** la force exercée sur la membrane (11) peut être calibrée.

**5.** Dispositif selon l'une quelconque des revendications précédentes, **caractérisé en ce que** le dispositif de protection contre les fuites (1) comprend un dispositif de mesure du temps et est conçu pour déterminer sous la forme d'une valeur moyenne temporelle la force exercée sur la membrane (11).

**6.** Dispositif selon l'une quelconque des revendications précédentes, **caractérisé en ce que** le canal d'écoulement au sein de la dérivation (5) présente plusieurs coudes devant et/ou derrière l'ouverture de passage (13) de la membrane (11), en particulier sous la forme d'un disque à méandre (16; 17).

**7.** Dispositif selon l'une quelconque des revendications précédentes, **caractérisé en ce que** la surface de l'ouverture de passage (13) représente au maximum 10 % de la surface totale de la membrane (11) et au maximum 1 % de la surface de section transversale du canal principal (4).

**8.** Dispositif selon l'une quelconque des revendications précédentes, **caractérisé en ce qu'**un capteur de débit volumétrique (6) permettant de détecter le débit volumétrique total est présent, et **en ce que** la valeur de seuil d'ouverture $\Delta p\ddot{o}$ de la vanne d'arrêt (8) est en particulier choisie de sorte que le débit volumétrique minimal dans le canal principal (4) vaut $V_{HK,min}$ :

$$V_{AW} \leq V_{HK,min} \leq 2V_{AW,}$$

$V_{AW}$ correspondant à la valeur de démarrage du capteur de débit volumétrique (6).

**9.** Procédé de fonctionnement d'un dispositif de protection contre les fuites (1) permettant de fermer automatiquement une conduite souple ou un tuyau destiné(e) au transport de fluides liquides ou gazeux selon l'une quelconque des revendications précédentes, **caractérisé en ce que** les signaux de mesure en provenance des moyens permettant de déterminer directement ou indirectement la force exercée sur la membrane (11) doivent, pendant une durée t1 prédéfinie, dépasser ou sous-dépasser la valeur limite GW pouvant être prédéfinie avant que le dispositif de commande électronique (9) ne transmette des signaux de commande de fermeture de l'organe de fermeture (7) aux moyens permettant de fermer l'organe de fermeture (7) et/ou ne génère un signal d'alarme de fuite.

**10.** Procédé selon la revendication 9, **caractérisé en ce que** la détermination directe ou indirecte de la force exercée sur la membrane (11) comprend les étapes ci-dessous consistant à :

a) fermer l'organe de fermeture (7),
b) déterminer la force exercée sur la membrane (11) sur une durée t2 prédéfinie et générer la valeur moyenne temporelle sous la forme d'une valeur zéro moyenne,
c) ouvrir l'organe de fermeture (7) et attendre pendant une durée t3 prédéfinie,
d) déterminer la force exercée sur la membrane (11) sur une durée t4 prédéfinie et générer la valeur moyenne temporelle sous la forme d'une force moyenne exercée sur la membrane (11),
e) comparer la valeur zéro moyenne et la force moyenne exercée sur la membrane (11).

**11.** Procédé selon la revendication 9 ou 10, **caractérisé en ce que** l'organe de fermeture (7) est fermé lorsqu'un débit volumétrique est enregistré, la valeur zéro moyenne étant déterminée à nouveau lorsque le débit volumétrique ne diminue pas après la fermeture de l'organe de fermeture (7).

**12.** Procédé selon l'une quelconque des revendications 9 à 11, **caractérisé en ce que** le dispositif de commande électronique (9) évalue les signaux de mesure en provenance du capteur de débit volumétrique (6) lorsque le capteur de débit volumétrique (6) détecte un débit volumétrique $\geq V_{AW}$, et **en ce que** le dispositif de commande électronique (9) évalue les signaux de mesure en provenance des moyens permettant déterminer directement ou indirectement la force exercée sur la membrane (11) lorsque le capteur de débit volumétrique (6) ne détecte pas de débit volumétrique, le dispositif de commande électronique (9) transmettant des signaux de commande de fermeture de l'organe de fermeture (7) aux moyens permettant de fermer l'organe de fermeture (7) en cas de dépassement ou de sous-dépassement d'une valeur limite GW pouvant être prédéfinie et/ou générant un signal d'alarme de fuite.

**13.** Procédé selon l'une quelconque des revendications 9 à 12, **caractérisé en ce que** la valeur limite GW destinée à l'évaluation des signaux de mesure en provenance des moyens permettant de déterminer directement ou indirectement la force exercée sur la membrane (11) et la valeur limite GW destinée à l'évaluation des signaux de mesure en provenance du capteur de débit volumétrique (6) sont différentes.

**14.** Procédé selon l'une quelconque des revendications 9 à 13, **caractérisé en ce que** la valeur limite GW dépend du nombre d'appartements associés à l'installation domestique située en aval et/ou du nombre de personnes utilisant l'installation domestique située en aval.

**15.** Procédé selon l'une quelconque des revendications 9 à 14, **caractérisé en ce que** le comportement de prélèvement individuel de l'installation domestique est déterminé lors d'une phase d'apprentissage et la valeur limite GW est adaptée au comportement de prélèvement individuel.

Fig. 1

Fig. 2

Fig. 3

Fig. 4

23

16

22

21

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19706564 A1
- WO 2014029699 A1
- WO 2012098038 A1
- DE 102018119815 A1
- EP 3032236 A1
- EP 3848690 B1
- DE 1943021 A
- DE 102019129324 A1
- US 2013291974 A1